# EUROPEAN PATENT SPECIFICATION

(11) **EP 2 996 797 B1**
(45) Date of publication and mention of the grant of the patent: **20.09.2017**
(21) Application number: 14739598.2
(22) Date of filing: 16.05.2014
(51) Int. Cl.: B01D 63/10

(54) **SPIRAL WOUND CROSSFLOW FILTER FOR PERMEATE SIDE CROSS FLOW**
SPIRALWICKELFILTER FÜR PERMEATSEITIGEN QUERSTROM
FILTRE ENROULÉ EN SPIRALE À ÉCOULEMENT TRANSVERSAL DE PERMÉAT

(30) Priority: 17.05.2013 US 201313896370
(43) Date of publication of application: 23.03.2016
(73) Proprietor: Yaeger, Scott P., La Porte, IN 46350 (US)
(72) Inventor: Yaeger, Scott P., La Porte, IN 46350 (US)
(74) Representative: Potter Clarkson LLP
(86) International application number: PCT/US2014/038370
(87) International publication number: WO 2014/186694

(56) References cited:
- WO-A1-91/11249
- WO-A1-93/10889
- WO-A1-2005/094963
- JP-A- H01 115 410
- US-A- 4 476 022
- US-A1- 2010 078 378
- US-A1- 2013 087 499

## Description

### CROSS-REFERENCE TO RELATED APPLICATION

### FIELD OF TECHNOLOGY

The present disclosure relates to improved spiral crossflow filters and methods involving spiral crossflow filters.

### BACKGROUND

Crossflow filtration is a type of membrane filtration that can be used when a fluid carries an amount of solid material that could plug a "dead end" filter. Crossflow filtration is different from dead end filtration. In dead end filtration, the feed is passed through a membrane or bed, trapping the retentate in the membrane or bed, and releasing the filtrate through the membrane or bed. Generally in dead end filtration, the only way for the feed fluid to exit the filter is through the membrane. In crossflow filtration, however, the feed is passed across the filter membrane (tangentially to the filter membrane) at some pressure, concentration, or other differential between the feed and the filtrate on the other side of the membrane. Material which is smaller than the membrane pore size passes through the membrane as filtrate. Some of the feed is trapped in or on the membrane as retentate, while the remaining feed flow passes across the filter on the feed side without passing through the membrane or becoming trapped in or on the membrane. The unfiltered feed flow exiting the filter is kept separate from the filtrate and may be recycled back through the filter. This mode of operation may be used for feeds with solids that cause a risk of "blinding." Blinding is an accumulation of retentate on the membrane that fouls and/or reduces the effectiveness of a filter. With dead end filtration, solid material can quickly blind the filter surface, and feed flow can no longer pass through the membrane, rendering the filter ineffective. With crossflow filtration, the tangential motion of the bulk of the fluid across the membrane causes trapped particles on the filter surface to be removed by the tangential feed flow. This means that a crossflow filter can operate continuously with reduced blinding at a relatively high solids load compared to dead end filters.

Crossflow filter devices can take many shapes, including plates, hollow fibers, tubes and spirals. A spiral crossflow filtration device may include filter media wrapped around a permeate tube in a "jelly roll" type design. When looking at the end of a "spiral" filter, the end edges of the individual leaves of the filter element make a plane curve traced by a point circling about the center axis but at ever-greater distances from it. Each "leaf" is essentially hollow, like an "envelope" made out of filter media. In a spiral crossflow filter, the feed fluid flows parallel to the permeate tube. The feed flow enters one of the leaf "envelopes" across the filter media. The filtered fluid, or permeate, goes through the media and spirals between the media inside the leaf "envelope" and into the permeate tube. The permeate exits the filter through the permeate tube, and is kept separate from the remaining feed flow which exits the filter separately.

Crossflow membrane filtration technology has been used widely in industry globally. Cross flow filtration may be used, for example, in microfiltration, ultrafiltration, nanofiltration, and reverse osmosis. There is still a need, however, for improved cross-flow filter devices. Spiral wound modules with permeate tube having a blocked middle portions are disclosed in WO2005/094963 A, WO91/11249 A, WO93/10889 A and JP 401115410 A. Spiral wound modules with permeate pipes having recessed perforated portions are disclosed in US4476022 A and US 2013/0087499 A. A spiral wound filter with pleats welded to the permeate tube is disclosed in US2010/0078378.

### BRIEF SUMMARY

The invention concerns a spiral cross-flow filter as defined in claim 1.

It is understood that the disclosed invention is not limited to the embodiments described in this Summary. The invention is intended to encompass modifications and other subject matter that are within the scope of the invention as defined solely by the claims.

### BRIEF DESCRIPTION OF THE FIGURES

Various characteristics and features of the disclosed non-limiting embodiments may be better understood by reference to the following figures, in which:
Figure 1 is a schematic exploded perspective view of an embodiment of a spiral cross-flow filter according to the present disclosure;
Figure 2 is a schematic view of a membrane and permeate spacer material that make up a composite filter element of a cross-flow filter as shown in Figure 1;
Figure 3 is a schematic view of a composite sandwich of the materials shown in Figure 2, illustrated in a partially pleated configuration;
Figure 4 is a schematic partial cross-sectional view of the crossflow filter shown in Figure 1, illustrating an edge of a pleated composite sandwich of a filter element attached to the permeate tube;
Figure 5 is a schematic partial perspective view of the crossflow filter shown in Figure 1, illustrating an edge of a pleated composite sandwich of a filter element attached to the permeate tube;
Figure 6 is a schematic partial perspective view of the crossflow filter shown in Figure 1, illustrating an edge of a pleated composite sandwich of a filter element attached to the permeate tube and having a feed spacer;
Figure 7 is a schematic end view of an end cap of the cross-flow filter shown in Figure 1;
Figure 8 is a schematic sectional view taken along line "A-A" in Figure 7 and showing an end cap attached to a spiral filter;
Figure 9 is a schematic cross-sectional side view of a permeate tube comprising a blocked middle portion and radially offset perforated sections forming annular manifolds disposed towards the inlet and outlet ends of the permeate tube;
Figure 10 is a schematic partial perspective view of the permeate tube shown in Figure 9;
Figure 11A is a schematic partial cross-sectional side view of the inlet end of the permeate tube shown in Figure 9; Figure 11B is a schematic partial cross-sectional side view of the outlet end of the permeate tube shown in Figure 9;
Figure 12 is a schematic partial perspective view of the permeate tube shown in Figure 9 with a pleated filter element comprising a plurality of circumferentially spaced leaves attached to an outer cylindrical surface of the permeate tube adjacent to the annular manifold;

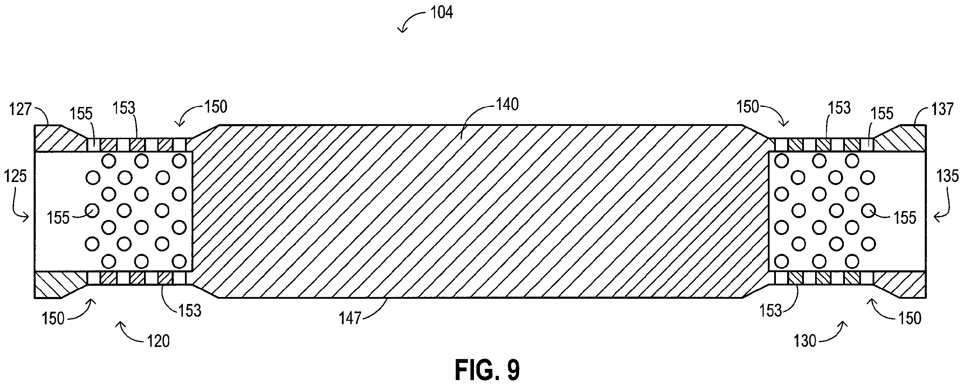

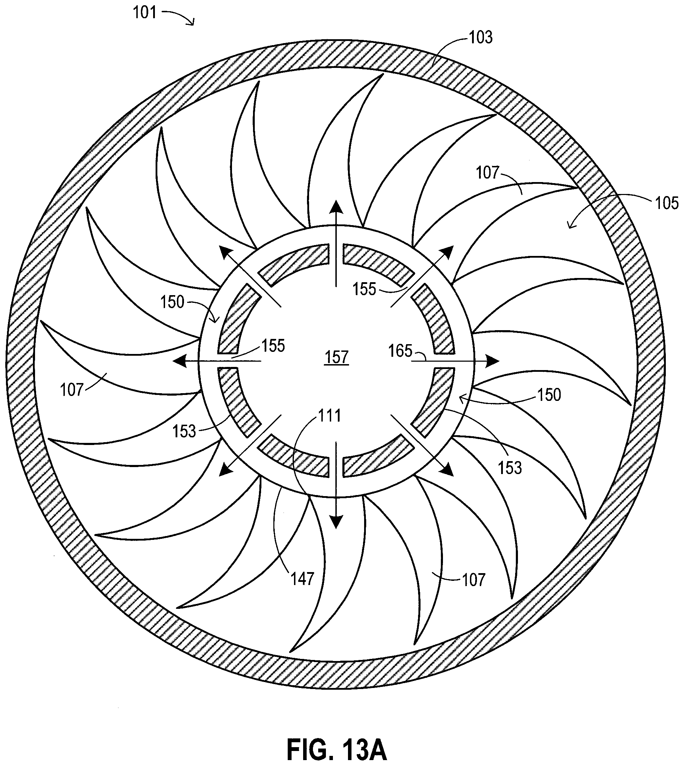

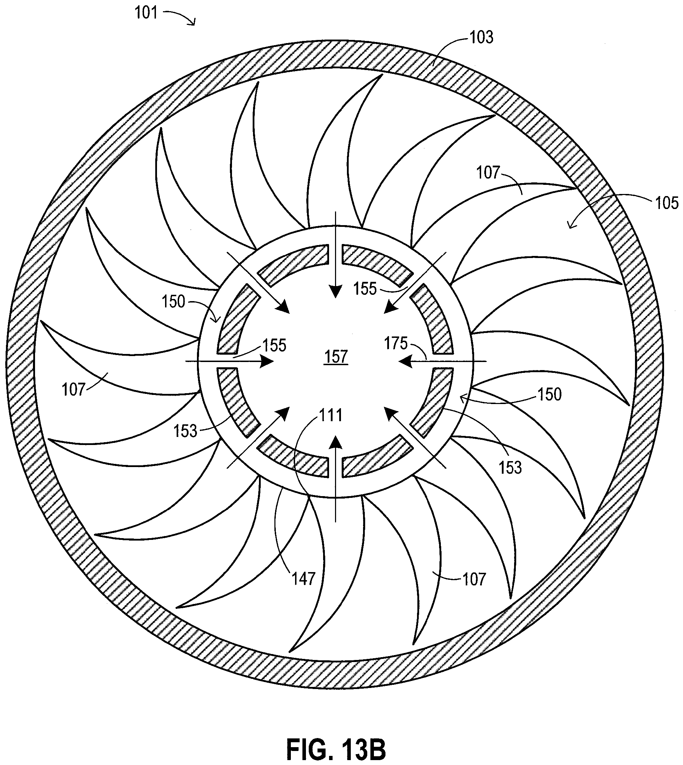

Figure 13A is a schematic cross-sectional end view of the inlet portion of a filter comprising the permeate tube shown in Figure 9 co-axially aligned with and radially offset from an outer cylindrical shell, and comprising an annular pleated filter element comprising a plurality of circumferentially spaced leaves attached to an outer cylindrical surface of the permeate tube; Figure 13B is a schematic cross-sectional end view of the outlet portion of a filter comprising the permeate tube shown in Figure 9 co-axially aligned with and radially offset from an outer cylindrical shell, and comprising an annular pleated filter element comprising a plurality of circumferentially spaced leaves attached to an outer cylindrical surface of the permeate tube;
Figure 14A is a schematic partial cross-sectional axial view of the inlet portion of the permeate tube and filter element assembly shown in Figures 9 and 13A and illustrating the attachment of the circumferentially spaced leaves to the permeate tube; Figure 14B is a schematic partial cross-sectional axial view of the outlet portion of the permeate tube and filter element assembly shown in Figures 9 and 13B and illustrating the attachment of the circumferentially spaced leaves to the permeate tube;
Figure 15 is a schematic partial cross-sectional side view of the inlet portion of the permeate tube and filter element assembly shown in Figures 9 and 13A illustrating tangential flow through the circumferentially spaced leaves; and
Figure 16 is a schematic side view of the permeate tube and filter element assembly shown in Figure 9 illustrating tangential flow through the circumferentially spaced leaves.

### DETAILED DESCRIPTION

It is to be understood that the various descriptions of the embodiments disclosed herein have been simplified to illustrate only those elements, features, and aspects that are relevant to a clear understanding of the disclosed embodiments, while eliminating, for purposes of clarity, other elements, features, and aspects. Persons having ordinary skill in the art, upon considering the present description of the disclosed embodiments, will recognize that other elements and/or features may be desirable in a particular implementation or application of the disclosed embodiments. However, because such other elements and/or features may be readily ascertained and implemented by persons having ordinary skill in the art upon considering the present description of the disclosed embodiments, and are therefore not necessary for a complete understanding of the disclosed embodiments, a description of such elements and/or features is not provided herein. As such, it is to be understood that the description set forth herein is merely exemplary and illustrative of the disclosed embodiments and is not intended to limit the scope of the invention as defined solely by the claims.

In the present disclosure, other than where otherwise indicated, all numbers expressing quantities or characteristics are to be understood as being prefaced and modified in all instances by the term "about." Accordingly, unless indicated to the contrary, any numerical parameters set forth in the following description may vary depending on the desired properties one seeks to obtain in the embodiments according to the present disclosure. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10. Any maximum numerical limitation recited herein is intended to include all lower numerical limitations subsumed therein and any minimum numerical limitation recited herein is intended to include all higher numerical limitations subsumed therein. Accordingly, Applicants reserve the right to amend the present disclosure, including the claims, to expressly recite any sub-range subsumed within the ranges expressly recited herein. All such ranges are intended to be inherently disclosed herein such that amending to expressly recite any such sub-ranges would comply with sufficiency of description requirements.

The grammatical articles "one", "a", "an", and "the", as used herein, are intended to include "at least one" or "one or more", unless otherwise indicated. Thus, the articles are used herein to refer to one or more than one (i.e., to at least one) of the grammatical objects of the article. By way of example, "a component" means one or more components, and thus, possibly, more than one component is contemplated and may be employed or used in an implementation of the described embodiments.

The present disclosure includes descriptions of various embodiments, including various different features, aspects, and characteristics of the embodiments. It is to be understood that all embodiments described herein are exemplary, illustrative, and non-limiting. Thus, the invention is not limited by the description of the various exemplary, illustrative, and non-limiting embodiments. Rather, the invention is defined solely by the claims.

In addition, the figures presented herein represent non-limiting embodiments of the disclosure. The figures are not drawn to scale or proportion and are provided solely to aid in the understanding of the various embodiments, and should not be interpreted to limit the scope of the present disclosure.

The embodiments described herein generally relate to devices for removing contaminants from a fluid, such as, for example, a liquid (e.g., water) or a gas (e.g., air). The embodiments described herein may also find utility in connection with other fluids. For example, a fluid to be purified or otherwise filtered may be any chemical, industrial, or biological fluid. As generally used herein, "contaminant" may refer to any undesirable agent in a fluid. For example, "contaminants" may include, but are not limited to, any solids and debris, heavy metals, polyaromatics, halogenated polyaromatics, minerals, vitamins, microorganisms or microbes (as well as reproductive forms of microorganisms, including cysts and spores) including viruses, fungi (for example, molds and yeasts), proteins and nucleic acids, pesticides and other agrochemicals including organic chemicals, inorganic chemicals, and dissolved salts.

As generally used herein, "removing contaminants" or "reducing contaminants" refers to disarming or removing one or more contaminants in the fluid, whether by physically or chemically removing, reducing, inactivating the contaminants, or otherwise rendering the one or more contaminants harmless. In addition, the present disclosure further envisions various aspects wherein particular embodiments include removing one or more contaminants but specifically excludes one or more types, groups, categories, or specifically identified contaminants as well. For example, in various aspects, "removing contaminants" may include one or more particular contaminants, or may include only one particular contaminant, or may specifically exclude one or more contaminants.

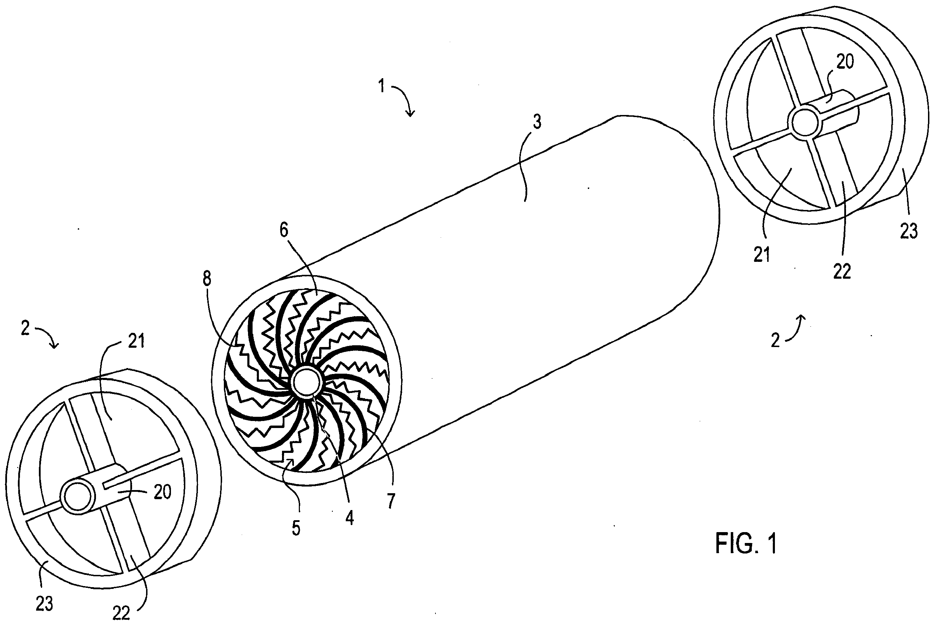

Figure 1 depicts an embodiment of a spiral cross-flow filter 1 according to various embodiments of the present disclosure. These embodiments have an outer cylindrical shell 3 and a porous permeate cylindrical tube 4 coaxially aligned within the shell 3 and radially offset therefrom. These embodiments further have an annular pleated filter element 5 disposed within an annulus 6 between the outer shell 3 and the permeate tube 4. The filter element 5 is formed from a plurality of leaves 7 and a plurality of feed spacers 8. For ease of illustration, the leaves 7 and feed spacers 8 shown in Figure 1 are not completely wrapped and packed tightly in "spiral" or "jelly-roll" configuration. Various embodiments of the cross-flow filter 1 may include end caps 2.

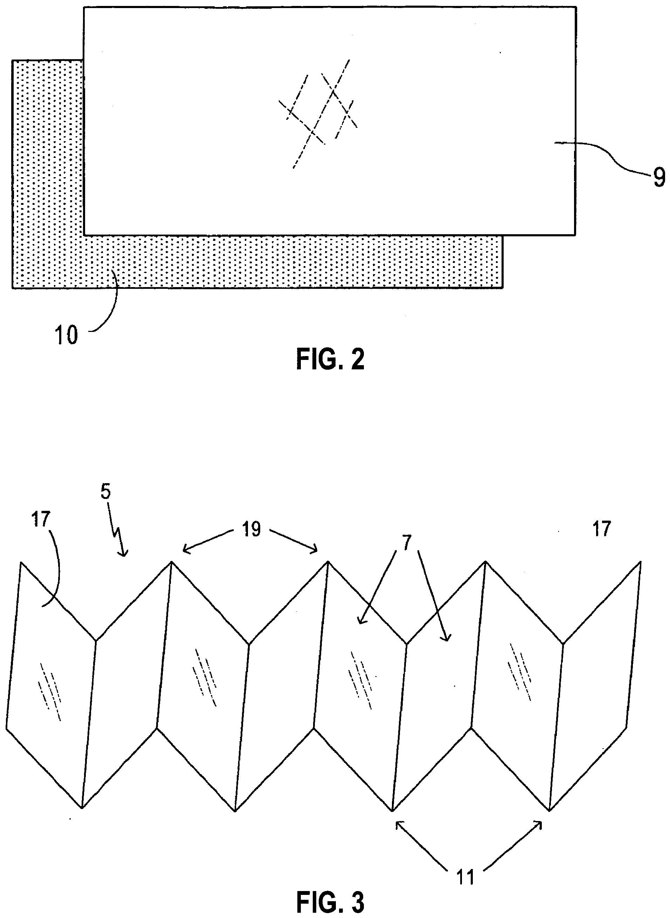

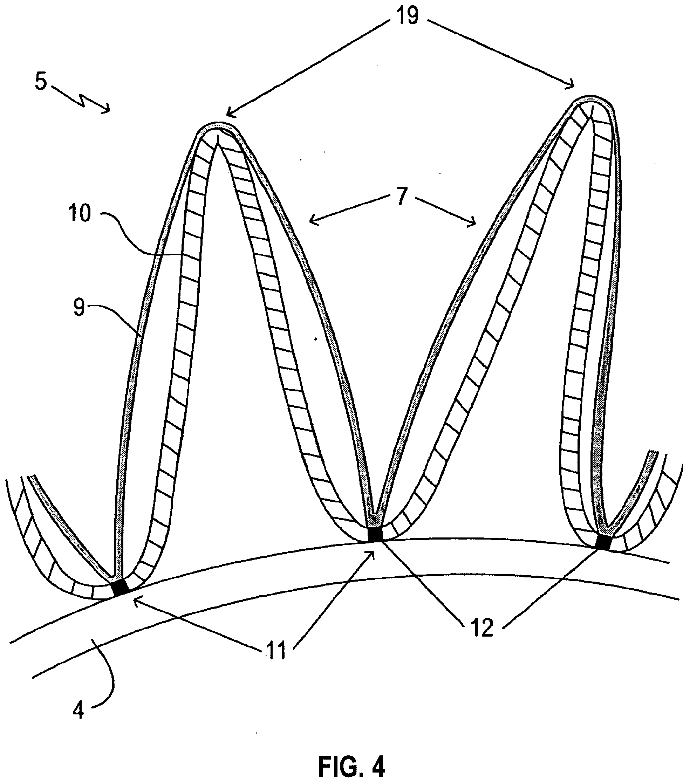

Referring now to Figure 2, a filter element may include a composite sandwich having at least a first layer of membrane material 9, and a second layer of a permeate spacer material 10. In a spiral filter as illustrated in Figure 1, the first layer of a membrane material 9 may be adjacent the outer shell 3, and the second layer of permeate spacer material10 may be adjacent the permeate tube 4. Referring now to Figure 3, a composite sandwich filter element 5 may include both layers and may be is pleated. A pleated filter element 5 may be placed around a permeate tube 4. Once placed around the permeate tube 4, the pleats of the filter element 5 may define a plurality of continuous, circumferentially spaced radial leaves 7. Once the filter element 5 is placed around the permeate tube 4, the leaves 7 may be wrapped around the permeate tube 4 in a uniform direction. The leaves 7 may be maintained in the wrapped position by the outer shell 3, and/or the end caps 2, for example. In various embodiments, the filter element 5 may not be attached to the permeate tube 4. In various embodiments, each leaf 7 may have an attachment 12 at its proximal edge 11 to the permeate tube 4. Once an attachment is formed, the plurality of leaves 7 may be wrapped around the permeate tube 4 in a uniform direction. Figure 4 shows a partial cross-sectional view of a filter element 5 attached to a permeate tube 4. Figure 4 shows only a portion of the permeate tube 4, and only two of a plurality of leaves 7. The filter element 5 includes attachments 12 at the proximal edges 11. Once attached to the permeate tube 4, each leaf 7 can be described as a "hollow envelope," having two layers 9,10.

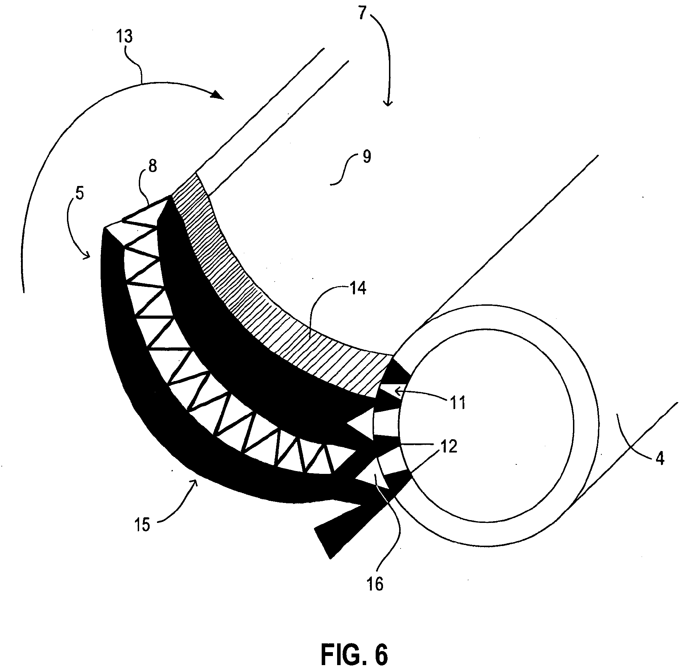

Figure 6 shows two leaves 7 of a filter element 5 attached to a permeate tube 4. Though only two leaves 7 are shown, various embodiments may have a greater number of leaves 7 attached continuously around the circumference of the permeate tube 4. In Figure 6, the leaves 7 are partially wrapped around the permeate tube 4 in the uniform direction shown by the arrow 13, but are not wrapped completely in the final "spiral" or "jelly roll" configuration. The filter element 5 shown in Figure 6 further includes a feed spacer 8 inserted in between the two leaves 7. In various embodiments, the filter element 5 includes a feed spacer 8 between each of the plurality of leaves 7. The purpose of the feed spacer 8 is to maintain separation between the leaves 7 to establish a feed flow path through the length of the filter element 5. The cross-flow facilitated by the feed spacers 8 helps to keep the membrane 9 from becoming fouled or blinded with aggregate retentate.

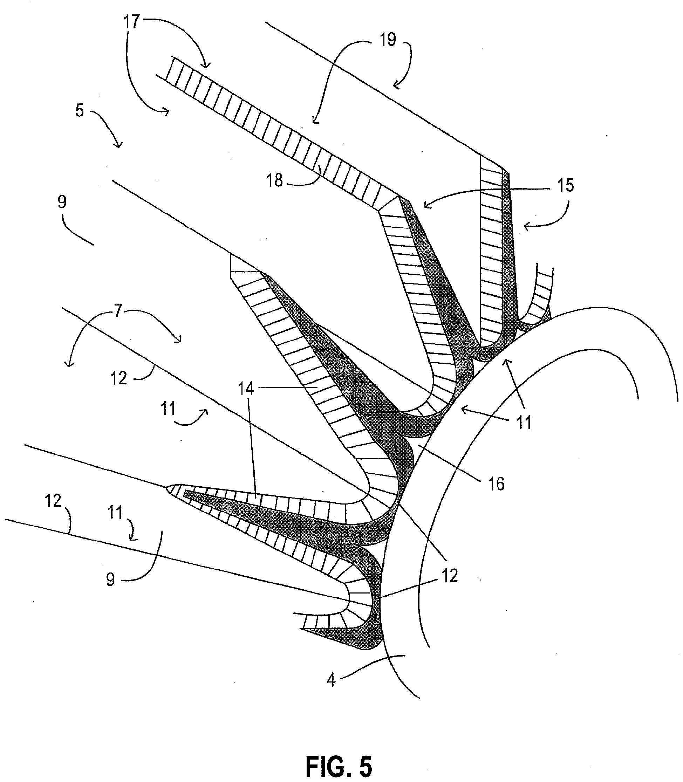

Figures 5 and 6 show partial perspective views of an end of a permeate tube 4 and filter element 5. In Figure 5, the leaves 7 have not yet been wrapped around the permeate tube 4. In Figure 6, the leaves 7 are partially wrapped around the permeate tube 4. Referring now to Figures 5 and 6, in various embodiments, each of the plurality of leaves 7 has a bond 14 at an edge 15 (inlet edge and/or an outlet edge), the bond 14 sealing together membrane material 9 and the permeate spacer material 10. As used herein, the term "seal" or "sealed" means that a substantially fluid impervious seal is formed, but the materials are not necessarily bonded together. As used herein, the term "bond" or "bonded" means that the materials described are physically and/or chemically bonded together, for example, with an adhesive, or some bonding technique, such as, for example, ultrasonic welding, such that a substantially fluid impervious seal is formed. The leaves 7 shown in Figures 5 and 6 also include an attachment 12 along proximal edge 11 of the leaves 7. Once bonded at the edges 15 and attached to the permeate tube 4, a "hollow envelope" having two layers is formed. The edge bond 14 can be formed after pleating and before being attached to the permeate tube 4, or after being attached to the permeate tube 4. The edge 15 of each leaf 7 is bonded together, yet the proximal edges 11 are slightly separated where they form an attachment 12 to the permeate tube 4. Therefore, in various embodiments, a small gap 16 may be formed near the proximal edges 11 of each leaf 7. In such embodiments, the gap 16 may be covered and sealed by the inner portion 20 of an end cap 2. In various embodiments, the end cap 2 is bonded to a portion of each leaf 7, covering and sealing the gap 16.

Referring now to Figure 5, because the plurality of leaves 7 are formed from at least one pleated filter element 5, the leaves 7 are continuous except for where the ends 17 of the pleated filter element 5 meet. In Figure 5, each end 17 of the filter element 5 makes up half of a leaf 7. Therefore, in various embodiments, at least one leaf 7 will have a bond 18 at the distal edge 19, joining the two ends 17 of the pleated filter element 5 and forming a leaf 7 with the ends 17. In various embodiments (not shown), each end 17 of the pleated filter element 5 will be the end of a complete leaf 7, and will not be a half of a leaf 7. In such an embodiment, the end 17 forms an attachment 12 at the proximal edge 11. The ends 17 of the filter element 5 will end in a complete leaf 7, and no leaf 7 will be formed by joining the ends 17 of a pleated filter element 5.

In various embodiments, the bonds 14, 18 and the attachments 12 do not comprise an adhesive. In various embodiments, the bonds 14, 18 and the attachments 12 are selected from the group consisting of an ultrasonic bond, a thermal bond, an IR bond, a radio frequency bond, and a microwave bond. In various embodiments, the bonds 14, 18 and the attachments 12 are an ultrasonic bond. In various embodiments, the attachments 12 are an ultrasonic bond that bonds the membrane 9 material and the permeate spacer 10 material of each leaf 7 at the proximal edge 11 to the permeate tube 4. In various embodiments, the bonds 14, 18 are ultrasonic bonds that bond the membrane 9 material and the permeate spacer 10 material of each leaf 7 at the edge 15 and a distal edge 19. In various embodiments, filter components that include an ultrasonic bond may be formed from the same base polymer, including any of the polymers recited herein. In various embodiments, the components may be formed from base polymers that are compatible for the purpose of ultrasonic bonding or welding. These components include the membrane 9 material, permeate spacer 10 material, permeate tube 4, end cap 2 and outer shell 3. These components may also include the feed spacer 8 and any other component described herein.

As shown in Figures 1 and 6, in various embodiments, the feed spacer 8 is formed from a corrugated thermoplastic sheet. The corrugations in the feed spacer 8 establish flow channels that create less flow restriction in the feed flow path compared to flat netting or other materials. It was surprisingly discovered that the use of a corrugated feed spacer 8 helps to balance the flow across the filter 1 allowing the filter 1 to handle higher cross flow rates, higher viscosity fluids, and higher amounts of feed solids while at the same time helping to avoid blinding. In various embodiments, the corrugated thermoplastic sheets forming the feed spacers 8 are porous. As used herein, "porous" includes a range of openings from microscopic apertures to macroscopic apertures. In various embodiments, the openings may be formed by an open lattice comprising an extruded thermoplastic net, for example. The openings may be formed in situ as the feed spacer 8 material is made, or the openings may be created by mechanical or chemical methods (e.g., punching, boring, drilling, perforating, and the like) after the feed spacer 8 material is made. In various embodiments, the corrugated thermoplastic sheets forming the feed spacers 8 are non-porous and substantially fluid impervious.

In various embodiments, the feed spacer 8 is formed from a corrugated thermoplastic sheet that is non-textured. As used herein, the term "non-textured" includes a surface that is substantially smooth on a macroscopic level. In various embodiments, the corrugated thermoplastic sheet is textured. As used herein, the term "textured" includes a surface that has raised features visible on a macroscopic level. A textured sheet may help to create turbulence in the fluid flow which may aid in the operation of the spiral crossflow filter as described herein. Examples of corrugated feed spacers may be found in US Patent No. 4,834,881 to Sawada et al., incorporated by reference herein.

In various embodiments, the corrugated thermoplastic sheet has an amplitude from 0.02 inches to 0.25 inches, and a wavelength from 0.02 inches to 0.25 inches. In various other embodiments, the corrugated thermoplastic sheet has an amplitude from 0.05 inches to 0.15 inches, and a wavelength from 0.05 inches to 0.15 inches. In various embodiments, the feed spacer 8 is made from a thermoplastic selected from the group consisting of polyvinylidene fluoride, polypropylene, polyester, polyethylene, polyethersulfone, polysulfone, polyacrylonitrile, nylon, ethylene chlorotrifluoroethlyene, fluoroethylenepropylene, perfluoroalkoxy, polyetheretherketone, polysynidilenesulfide, polycarbonate, and co-polymers and blends of any thereof.

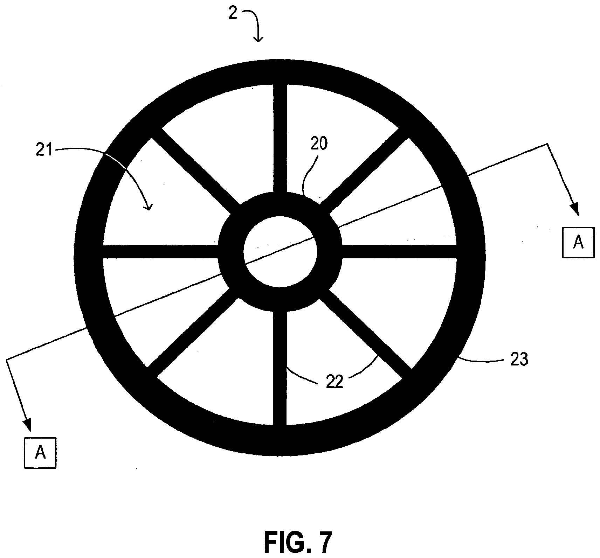

Figure 7 shows an end view of an end cap 2. Various embodiments may include an inlet end cap 2 on an inlet end of the permeate tube 4, and an outlet end cap 2 on an outlet end of the permeate tube 4. The end caps 2 have an inner portion 20 sealing the inlet end or outlet end of the permeate tube 4. In various embodiments, the inner portion 20 also seals gaps 16 near the proximal edges 11 of the leaves 7, and may be bonded to a portion of the leaves 7. The end cap 2 also has at least one open portion 21 directing the inlet fluid flow towards inlet edges 15 of the plurality of leaves 7, or directing an outlet fluid flow from the outlet edges 15 of the plurality of leaves 7. Various embodiments may include an outlet end cap 2 attached to at least an outlet end of the permeate tube 4, the outlet end cap 2 having structures configured to separate the permeate fluid flow flowing from the permeate tube 4 from the outlet fluid flow flowing from the outlet edges 15 of the plurality of leaves 7.

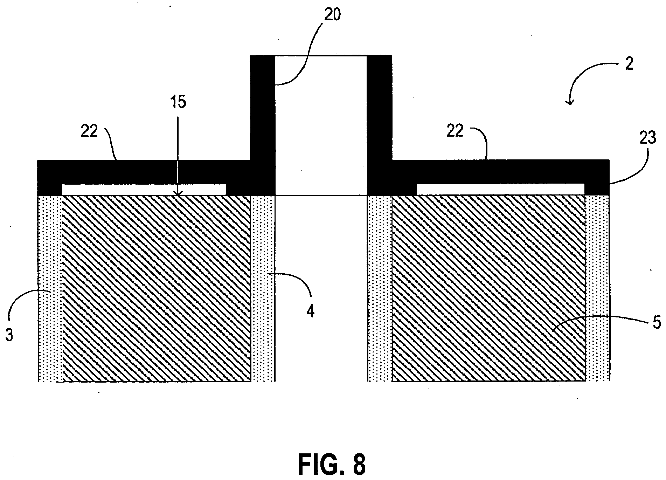

Referring now to Figure 8, in various embodiments, the end cap 2 is bonded to and seals the end of the permeate tube 4. In various embodiments, on the inlet side, the inner portion 20 of the end cap 2 is closed, such that no fluid enters the permeate tube 4 at the inlet end. On the outlet side, the inner portion 20 of the end cap 2 is open, such that permeate may exit the filter 1. In various embodiments, both the inlet and outlet ends of the permeate tube 4 are open, and not blocked by the inner portion 20 of the end caps 2. In various embodiments, a middle portion of the permeate tube 4 is blocked. In such an embodiment, fluid flows in the inlet end of the permeate tube 4. The blocked middle portion forces the fluid out of the permeate tube and into the leaves 7. Once in the leaves, the fluid flows parallel to the permeate tube 4 and remains in the leaves. In such an embodiment, the filtered fluid can pass from feed side to permeate side or from permeate side to feed side. The fluid re-enters the permeate tube 4 downstream from the blocked middle portion of the permeate tube. In various other embodiments, both ends of the permeate tube 4 are open and both ends are outlet ends. This allows for a reduced fluid flow restriction since fluid crossing the membrane 9 and entering the leaves 7 and then the permeate tube 4 may exit the permeate tube 4 at either end.

In Figure 8, the filter element 5 is indicated by the shaded area. A plurality of leaves 7 are wrapped around the permeate tube 4 in a uniform direction, however, individual leaves 7 are not shown in this figure. In embodiments as illustrated in Figure 8, the ribs 22 of the end cap 2 are not bonded to the edges 15 of the leaves 7. In various embodiments, the ribs 22 are bonded to the edges 15 of the plurality of leaves 7 of the filter element 5. As previously mentioned, the inner portion 20 of the end cap 2 may also seal or be bonded to a portion of the leaves 7 that may include a gap 16.

The outer cylindrical shell 3 may be made of a rigid thermoplastic, fiberglass, or metal tube, or may be made of a non-rigid material, such as, for example, but not limited to, tape. In various embodiments, the outer cylindrical shell 3 may be formed after the leaves 7 have been wrapped around the permeate tube 4. In such embodiments, the shell 3 may be formed by wrapping a flexible material such as fiberglass around the filter element 5. In either case, the outer portion 23 of the end cap 2 forms a seal with the outer cylindrical shell 3. In various embodiments, the outer portion 23 of the end cap 2 may further be bonded to the shell 3. In various embodiments, the inlet end cap 2 and outlet end cap 2 are bonded to at least the permeate tube 4, and possibly also the shell 3, by a method selected from the group consisting of ultrasonic welding, thermal bonding, IR bonding, radio frequency bonding, and microwave bonding.

In operation, feed flow is directed at the inlet edges 15 of the leaves 7 of the filter element 5. The feed flow may enter the spiral filter 1 through openings 21 in the end cap 2. Feed flow is directed in between the leaves 7 at the inlet edges 15. Space may be maintained in between the leaves 7 by feed spacers 8. Filtrate may pass through the membrane 9 and enter the leaf 7 at any point along any of the leaves 7 that are wrapped around the permeate tube 4. The filtrate may be forced through the membrane 9 by a pressure differential, concentration gradient, or any other means. Once filtrate has passed through the membrane 9 of a leaf 7, the filtrate remains within that leaf 7. The filtrate is forced to flow towards the permeate tube 4 while inside of the leaf 7. While inside of the leaf 7, the filtrate must eventually pass through the permeate spacer 10 so that it can enter the porous permeate tube 4. The permeate tube 4 is porous for at least a portion of its length such that it is in fluid communication with the inside of each leaf 7. Once inside the permeate tube 4, the filtrate flows out of the filter 1 through the outlet end of the permeate tube 4. The filtrate is kept separate from feed flow exiting the filter 1 that has not entered a leaf 7. Feed flow that has not entered a leaf 7 exits the spiral filter 1 past the outlet edges 15 of the leaves 7 of the filter element 5. A constant stream of unfiltered feed flowing tangentially to the leaves 7 helps to remove or carry away retentate from the filter surface membrane 9 and keeps the membrane 9 from blinding. In various embodiments, the remaining feed flow exits the filter 1 through openings 21 in an outlet end cap 2. The unfiltered feed flow may eventually be recycled back into the spiral filter 1 through the inlet end cap 2.

In various embodiments, a filter as described herein may have a cross-flow rate (measured as fluid velocity) of greater than or equal to 3 M/sec. In various embodiments, a filter as described herein may have a cross-flow rate of greater than or equal to 5 M/sec. In various embodiments, a filter as described herein may have a cross-flow rate of less than or equal to 1 M/sec. In various embodiments, a filter as described herein may have a cross-flow rate from 1 M/sec to 5 M/sec or from 1 M/sec to 3 M/sec. In various other embodiments, a filter as described herein may have a cross-flow rate from 20 cm/sec to 100 cm/sec.

In various embodiments, a cross-flow filter as described herein may have a ratio of leaf height to spiral diameter of less than or equal to 3, in some embodiments less than or equal to 2.5, and in other embodiments less than or equal to 2. As used herein, "leaf height" refers to the distance from a point between the proximal edges of a leaf to the distal edge of a leaf when the leaf extends radially from a permeate tube, for example, as shown in Figures 4 and 5. As used herein, "spiral diameter" refers to the length of the diameter of a filter as described herein, measured from the outside edge of the permeate tube to the inside edge of the outer cylindrical shell.

A filter as described herein may be used for a variety of filtering applications. In various embodiments, the membrane material of a spiral crossflow filter may be made from a material selected from the group consisting of a microfiltration material, an ultrafiltration material, a nanofiltration material, and a reverse osmosis material. As used herein, a microfiltration material is defined as a porous filter material that removes the majority of particles less than 10 microns down to 0.01 microns, typically at a greater than 90% efficiency. An ultrafiltration material, as used herein, is defined as a porous filter material that, in addition to performing like a microfiltration material, removes the majority of molecules from about 1 million Daltons down to less than 1,000 Daltons, typically at a greater than 90% efficiency. As used herein, a nanofiltration material is defined as a porous filter material that, in addition to performing as an ultrafiltration material, removes the majority of multi-valent ions, typically at a greater than 90% efficiency. As used herein, a reverse osmosis material is defined as a porous filter material that, in addition to performing as a nanofiltration material, removes the majority of single valent ions, typically at a greater than 90% efficiency.

A filter as described herein may be useful with any known material suitable for the types of filtration listed herein. In various embodiments, a membrane material may be selected the group consisting of a microfiltration material and an ultrafiltration material. In various embodiments, the membrane material may be formed from a material selected from the group consisting of polyvinylidene fluoride, polypropylene, polyester, polyethylene, polyethersulfone, polysulfone, polyacrylonitrile, nylon, ethylene chlorotrifluoroethlyene, fluoroethylenepropylene, perfluoroalkoxy, polytetrafluorethylene, polyetheretherketone, polysynidilenesulfide, and polycarbonate. In various embodiments, the membrane material may be selected from the group consisting of polyvinylidene fluoride and polyethersulfone.

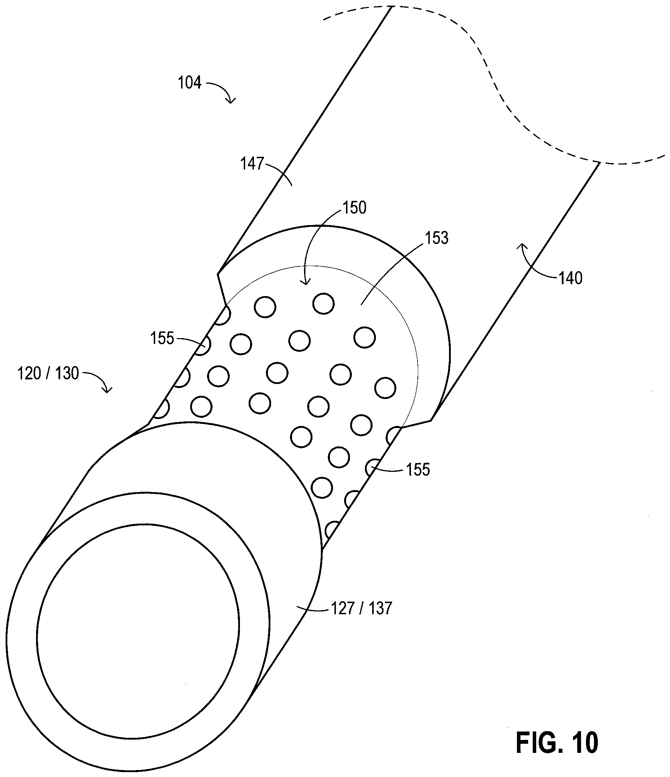

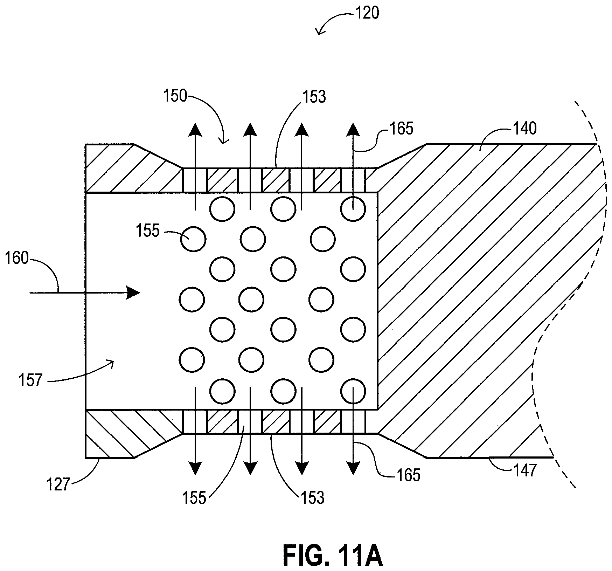

Referring to Figures 9-11B, a permeate tube 104 comprises a middle portion 140 separating an inlet portion 120 and an outlet portion 130. The middle portion 140 of the permeate tube 104 is blocked and does not permit fluid flow through the entire length of the permeate tube 104. Instead, the blocked middle portion 140 forces fluid entering through the inlet end 125 of the permeate tube 104 out through perforation 155 formed in an axially offset section 153 of the inlet portion 120. Referring to Figure 11A, fluid entering through the inlet end 125 of the permeate tube 104 is depicted by arrow 160. The fluid flow 160 enters into the hollow lumen 157 in the inlet portion 120 of the permeate tube 104 and is forced out through perforations 155 in the axially offset section 153 of the cylindrical wall of the inlet portion 120, as depicted by arrows 165.

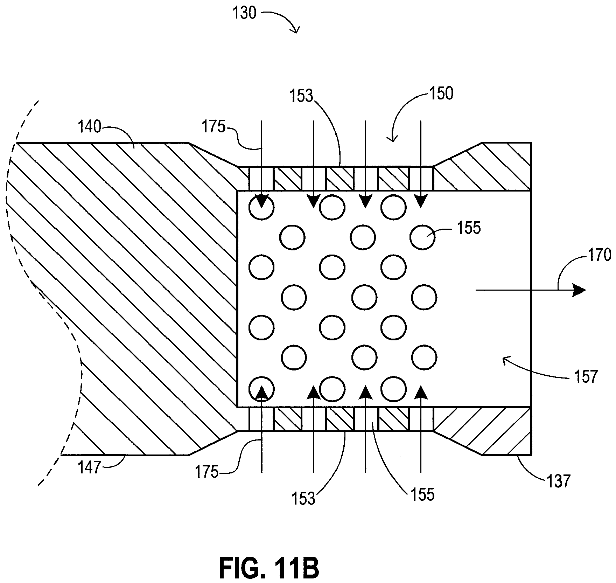

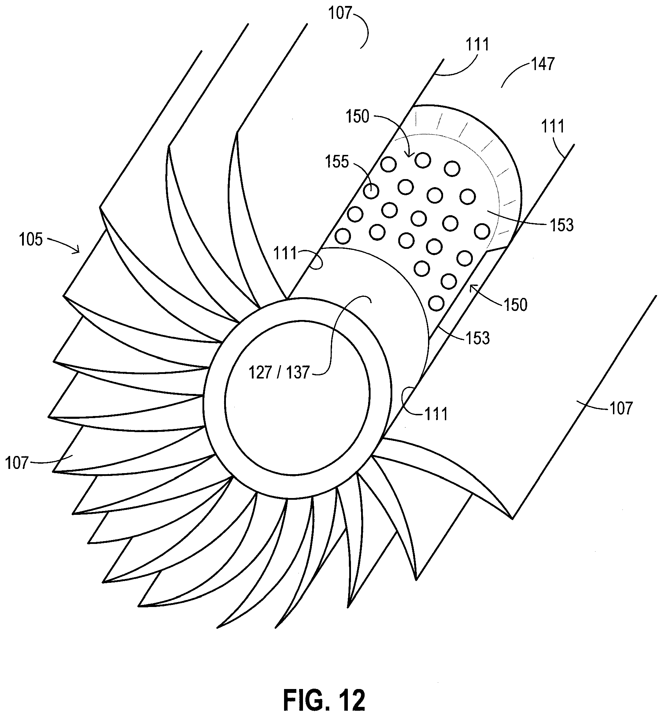

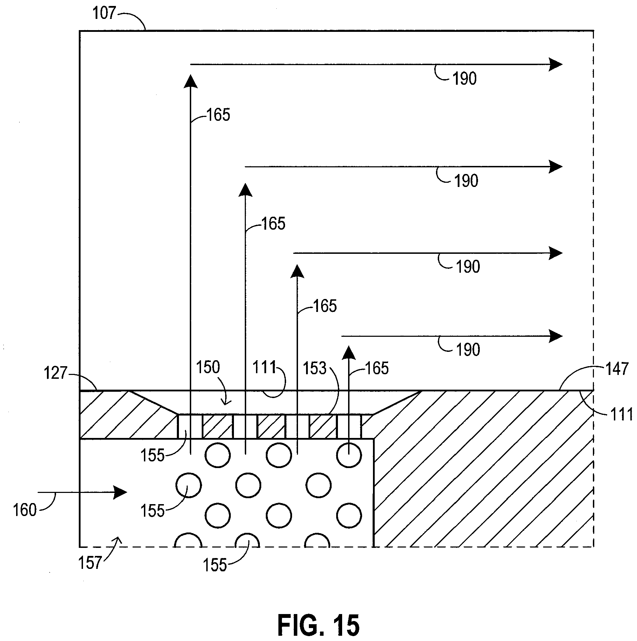

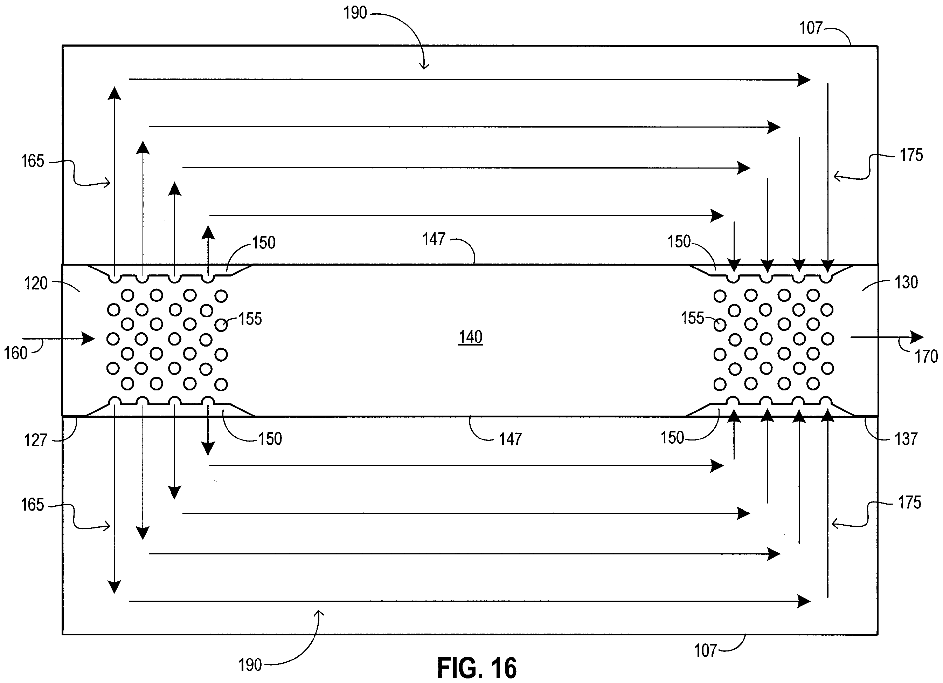

The fluid flow 165 forced out of the inlet portion 120 of the permeate tube 104 enters the circumferentially spaced leaves of an annular pleated filter element (described in greater detail below in connection with Figures 12-16). Once in the leaves of the filter element, the fluid flows tangentially to the blocked middle portion 140 of the permeate tube 104 (see Figures 15 and 16, described below). Referring to Figure 11B, after flowing tangentially through the leaves of the filter element, the fluid re-enters the permeate tube through perforations 155 in an axially offset section 153 of the cylindrical wall of the outlet portion 130, as depicted by arrows 175. The fluid flow 175 entering into the outlet portion 130 of the permeate tube 104 through the perforations 155 combines in the hollow lumen 157 in the outlet portion 130 and exits the permeate tube 104 through outlet end 135, as depicted by arrow 170.

The inlet portion 120 and the outlet portion 130 of the permeate tube 104 each comprise annular shaped manifolds 150 formed by the radially offset sections 153 of the inlet portion 120 and the outlet portion 130. The radially offset sections 153 of the inlet portion 120 and the outlet portion 130 are radially offset relative to the outer cylindrical surface 147 of the middle portion 140. The radially offset sections 153 of the inlet portion 120 and the outlet portion 130 are also radially offset relative to the outer cylindrical surface 127 of the inlet portion 120 and the outer cylindrical surface 137 of the outlet portion 130, respectively. The radially offset sections 153 are radially offset inwardly away from the outer cylindrical surfaces of the permeate tube 104 and toward the hollow lumens 157 of the inlet portion 120 and the outlet portion 130.

The perforations 155 in the cylindrical walls of the inlet portion 120 and the outlet portion 130 of the permeate tube 104 are located in the radially offset sections 153 and form apertures that provide fluid communication between the manifolds 150 and the hollow lumens 157 in the inlet portion 120 and the outlet portion 130, respectively. The perforated radially offset sections 153 of the cylindrical walls of the inlet portion 120 and the outlet portion 130 of the permeate tube 104 divide the outer cylindrical surface of the permeate tube 104 into the outer cylindrical surface 127 of the inlet portion 120, the outer cylindrical surface 137 of the outlet portion 130, and the outer cylindrical surface 147 of the middle portion 140.

In the embodiment shown in Figures 9-11A, the permeate tube 104 has a constant outer diameter along the entire axial length of the permeate tube other than at the radially offset sections 153 and at the transitions from the outer cylindrical surfaces (127, 137, 147) of the permeate tube 104 to the radially offset sections 153. However, it is understood that, in various embodiments, the outer diameter of a permeate tube may vary along the axial length of the permeate tube. For example, in various embodiments, the outer cylindrical surfaces 127 and 137 of the inlet portion 120 and the outlet portion 130, respectively, may have a diameter that is less than or greater than the diameter of the outer cylindrical surface 147 of the middle portion 140. In various embodiments, the perforated radially offset sections 153 may be radially offset inwardly relative to at least one of the outer cylindrical surface 127 of the inlet portion 120, the outer cylindrical surface 137 of the outlet portion 130, and the outer cylindrical surface 147 of the middle portion 140.

The middle portion 140 is located in between the radially offset section 153 of the inlet portion 120 and the radially offset section 153 of the outlet portion 130. In the embodiment shown in Figures 9-11B, the middle portion 140 of the permeate tube 104 is blocked along the entire axial length of the middle portion 140 located between the respective radially offset sections 153. However, it is understood that, in various embodiments, a middle portion of a permeate tube may be blocked along only one or more sections of the axial length of the middle portion, provided that the middle portion blocks fluid flow through the permeate tube and forces fluid flow from an inlet portion through perforations in a radially offset section and into a manifold, and provided that fluid flow can re-enter an outlet portion of the permeate tube downstream from the middle portion through a manifold formed by a perforated radially offset section of the outlet portion.

In the embodiment shown in Figures 9-11B, the permeate tube 104 is symmetrical about a midpoint along the axial length of the permeate tube. As such, the structural configuration and dimensions of the inlet portion 120 and the outlet portion 130 are the same, including the perforated radially offset sections 153 and the manifolds 150. However, it is understood that, in various embodiments, the structural configuration of the inlet portion 120 and the outlet portion 130 may be different, provided that at least the inlet portion comprises a perforated radially offset section forming a manifold in fluid communication with a hollow lumen that opens to and provides fluid communication through the inlet end of the permeate tube.

For example, in various embodiments, the axial length of the radially offset section of the inlet portion may be the same or different than the axial length of the radially offset section of the outlet portion; the magnitude of the radial offset of the radially offset section of the inlet portion may be the same or different than the magnitude of the radial offset of the radially offset section of the outlet portion; the number, shape, and/or dimensions of the perforations in the radially offset section of the inlet portion may be the same or different than the number, shape, and/or dimensions of the perforations in the radially offset section of the outlet portion; the inner diameter and/or axial length of the hollow lumen of the inlet portion may be the same or different than the inner diameter and/or axial length of the hollow lumen of the outlet portion; and/or the outer diameter and/or axial length of the outer cylindrical surface of the inlet portion may be the same and/or different than the outer diameter and/or axial length of the outer cylindrical surface of the outlet portion. In other embodiments, the inlet portion of a permeate tube may comprise a radially offset section and annular manifold and the outlet portion may lack a radially offset section and annular manifold.

Figure 12 illustrates an assembly comprising the permeate tube 104 shown in Figures 9-11A and a pleated filter element 105. The pleated filter element 105 comprises a plurality of circumferentially spaced leaves 107 defined by the pleats of the filter element 105. The filter element 105 and the filter leaves 107 may, in various embodiments, comprise the same structural configurations, materials of construction, sealing/bonding, and attachment mechanisms described above in connection with filter element 5 and filter leaves 7 shown in Figures 1-6. The filter element 105 is attached to the permeate tube 104 through attachments 12 formed between proximal edges 111 of the leaves 107 and the outer cylindrical surfaces (127, 137, and/or 147) of the permeate tube 104. For ease of illustration, the filter element 105 and leaves 107 depicted in Figures 12-16 are shown in a spaced-apart configuration and lacking feed spacers positioned between adjacent leaves. However, it is understood that, in various embodiments, a filter may comprise a permeate tube and filter element assembly wherein the leaves of the filter element are wrapped around the permeate tube in a uniform direction in a final spiral or "jelly roll" type configuration. It is also understood that, in various embodiments, a filter may comprise a permeate tube and filter element assembly comprising one or more feed spacers positioned between two or more adjacent leaves of the filter element. Such feed spacers may comprise the same structural configurations, materials of construction, and other features described above in connection with feed spacers 8 shown in Figures 1 and 6.

The leaves 107 of the filter element 105 comprise an axial length that is substantially the same as the axial length of the permeate tube 104 (see Figure 16). The proximal edges 111 of the leaves 107 are in physical contact with and attached to the outer cylindrical surface 127 of the inlet portion 120. The proximal edges 111 of the leaves 107 are in physical contact with and attached to the outer cylindrical surface 137 of the outlet portion 130. The proximal edges 111 of the leaves 107 may be, but are not necessarily, in physical contact with and attached to the outer cylindrical surface 147 of the middle portion 140.

The attachments 112 between the proximal edges 111 of the leaves 107 and the outer cylindrical surfaces of the permeate tube may be located along the entire axial lengths of the respective outer cylindrical surfaces or may be located along only a segment of the axial lengths of the respective outer cylindrical surfaces or at discrete locations along the axial lengths of the respective outer cylindrical surfaces such as, for example, proximally and distally adjacent to the manifolds 150. The attachments 112 between the proximal edges 111 of the leaves 107 and the outer cylindrical surfaces of the permeate tube may comprise chemical or physical bonds that provide a substantially fluid impervious seal between the proximal edges 111 of the leaves 107 and at least a portion of an outer cylindrical surface of the permeate tube. For example, ultrasonic welding may be used to form bonds between the proximal edges 111 of the leaves 107 and at least a portion of an outer cylindrical surface of the permeate tube, for example, adjacent to a manifold.

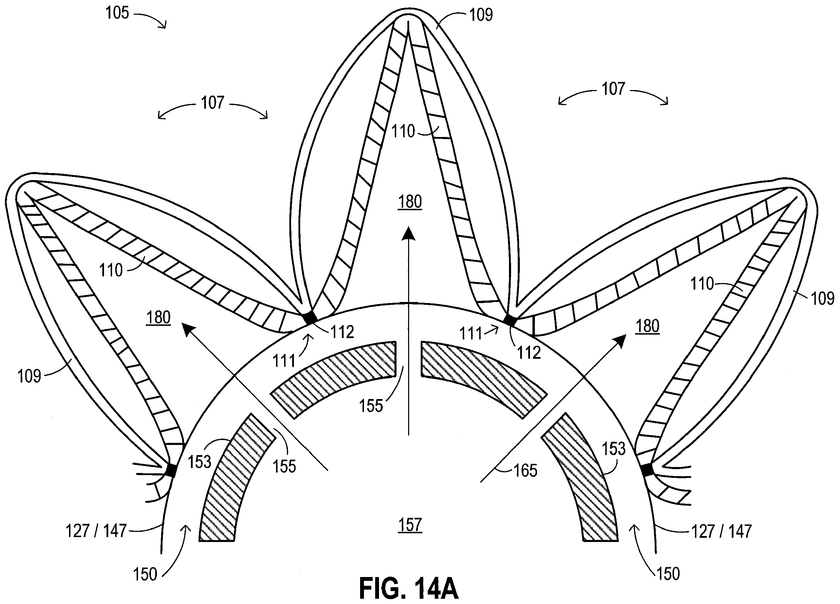

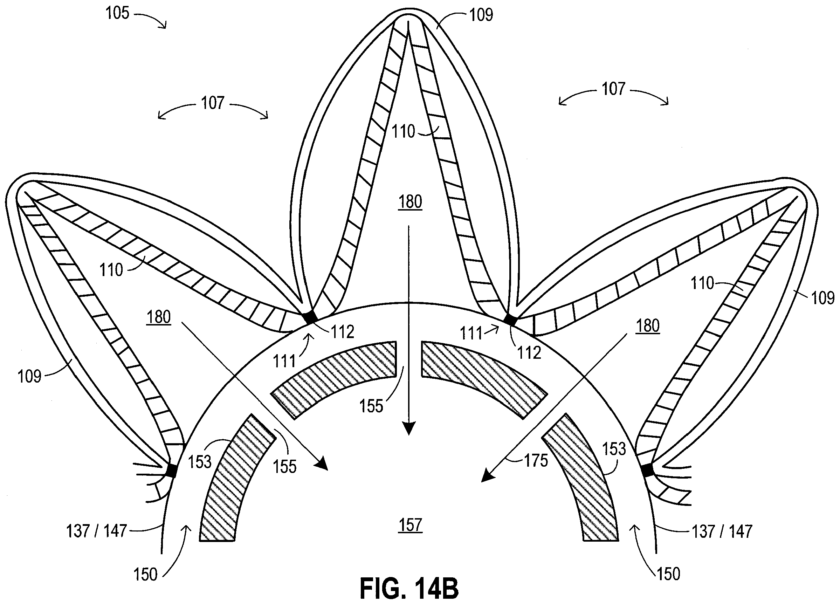

A number of leaves 107 are omitted from the views shown in Figures 12, 14A, 14B, 15, and 16 to illustrate the orientation of the filter element 105 relative to the manifold 150. The circumferential spacing of the leaves 107 around the circumference of the permeate tube 104 (see Figures 13A and 13B), and the attachment of the proximal edges 111 of the leaves 107 to at least the outer cylindrical surface 127 of the inlet portion 120 and the outer cylindrical surface 137 of the outlet portion 130 (see Figures 14A and 14B), complete the annular configuration of the manifolds 150, which completely encircle the perforated radially offset sections 153 of the inlet portion 120 and the outlet portion 130 of the permeate tube. In this manner, the leaves 107 of the filter element 105 axially span between the outer cylindrical surface 147 of the middle portion 140 and the outer cylindrical surfaces 127 and 137 of the inlet and outlet portions 120 and 130, respectively, but the leaves 107 do not enter into the annular manifold 150 and, therefore, do not physically contact the perforated radially offset section 153.

The assembly comprising the permeate tube 104 and the pleated filter element 105 is positioned inside an outer cylindrical shell 103, as shown in Figures 13A and 13B, to form a spiral cross flow filter 101. The permeate tube 104 is positioned in co-axial alignment with the outer cylindrical shell 103 and radially offset therefrom, for example, in a concentric orientation. The outer cylindrical shell 103 of the spiral cross flow filter 101 may comprise the same structural configurations, materials of construction, and other features described above in connection with the outer cylindrical shell 3 of the spiral cross flow filter 1 shown in Figures 1 and 8. In various embodiments, the spiral cross flow filter 101 may comprise an inlet end cap and an outlet end cap. For example, an inlet end cap and an outlet end cap may comprise the same structural configurations, materials of construction, and other features described above in connection with the end cap 2 shown in Figures 1, 7, and 8.

As illustrated in Figures 13A and 14A, fluid flow entering into the hollow lumen 157 in the inlet portion 120 of the permeate tube 104 and is forced out through perforations 155 in the axially offset section 153 of the cylindrical wall of the inlet portion 120, as depicted by arrows 165. The fluid flow 165 exits from the hollow lumen 157 of the inlet portion 120 of the permeate tube and enters into the annular manifold 150, which provides for a uniform distribution of the fluid flow from the inlet portion 120 of the permeate tube 104 to the internal envelope 180 formed in the leaves 107 of the filter element 105. Once in the internal envelope 180 in the leaves 107 of the filter element 105, the fluid flows tangentially to the blocked middle portion 140 of the permeate tube, as depicted by arrows 190 in Figures 15 and 16. The composite sandwich structure of the pleated filter element 105 comprising membrane material 109 and permeate spacer material 110 provides a semi-permeable barrier between the tangential permeate tube-side fluid flow 190 and a tangential shell-side fluid flow (not shown).

As illustrated in Figures 13B, 14B, and 16, the tangential fluid flow 190 exits from the internal envelope 180 in the leaves 107 of the filter element 105 and enters into the manifold 150, which provides for a uniform distribution of the fluid flow from the filter element 105 to the outlet portion 130 of the permeate tube 104, as depicted by arrows 175. In this manner, the fluid flow 175 re-enters the permeate tube 104 through perforations 155 in the axially offset section 153 of the cylindrical wall of the outlet portion 130. The fluid flow 175 entering into the outlet portion 130 of the permeate tube 104 through the perforations 155 combines in the hollow lumen 157 in the outlet portion 130 and exits the permeate tube 104 through outlet end 135, as depicted by arrow 170.

Referring to Figures 14A and 14B, the pleats of the pleated filter element 105 form the leaves 107, which may be wrapped around the permeate tube 104 in a final spiral configuration in a cross-flow filter (not shown). The filter element 105 comprises a composite sandwich structure comprising a first layer of membrane material 109 and a second layer of permeate spacer material 110. In a spiral wound cross-flow filter, the layer of membrane material 109 may be located adjacent to an outer shell (not shown in Figures 14A and 14B, but see Figures 13A and 13B) and the layer of permeate spacer material 110 may be located adjacent to the permeate tube 104.

As shown in Figures 14A and 14B, both the layer of membrane material 109 and the layer of permeate spacer material 110 are pleated to form the leaves 107 of the filter element 105. The leaves have proximal edges 111 (proximal relative to the permeate tube 104), which physically contact at least the outer cylindrical surface 127 of the inlet portion 120 and the outer cylindrical surface 137 of the outlet portion 130. The filter element 105 is secured to the permeate tube 104 with attachments 12 between at least a portion of the proximal edges 111 of the leaves 107 and at least a portion of the outer cylindrical surface 127 of the inlet portion 120 and the outer cylindrical surface 137 of the outlet portion 130. In some embodiments, attachments 12 may also be formed between the proximal edges 111 of the leaves 107 and at least a portion of the outer cylindrical surface 147 of the middle portion 140. The attachments 12, which may comprise, for example, ultrasonic welded bonds or another adhesive-free bonding mechanism, may be located along the entire axial lengths of the respective outer cylindrical surfaces or may be located along only a segment of the axial lengths of the respective outer cylindrical surfaces or at discrete locations along the axial lengths of the respective outer cylindrical surfaces. For example, the attachments 12 may be located proximally and/or distally adjacent to the manifolds 150 (proximal and/or distal relative to the axial length of the permeate tube 104). The attachments 12 secure the filter element 105 to the permeate tube and maintain the internal envelopes 180 within each leaf 107.

In various embodiments, the attachments and bonds described herein in connection with the various components of a filter may be formed, for example, by one or more of ultrasonic welding, thermal bonding, IR bonding, radio frequency bonding, microwave bonding, laser welding, or hot air welding.

Spiral cross-flow filters comprising permeate tubes comprising inlet and outlet end manifolds facilitate filtration operations (*e.g*., membrane distillation and osmotic membrane distillation) that may benefit from co-current or counter-current tangential flow through the filters (*i.e*., tangential flow on both sides of the filtration membrane: permeate tube-side and shell-side). The annular manifolds described in this specification provide for optimized fluid flow dynamics by minimizing flow restrictions and producing a uniform distribution of fluid flow through the leaves of the filter element on the permeate tube-side of the pleated filter element.

An example of an application of spiral cross-flow filters comprising permeate tubes comprising inlet and outlet end manifolds is membrane distillation of brine (sodium chloride) or other salt-containing aqueous solutions. A concentrated caustic solution (NaOH) flows through the permeate tube-side of a spiral cross-flow filter comprising inlet and outlet end manifolds, which facilitate the flow of the caustic solution from the inlet of the permeate tube through the leaves of the filter element and the outlet of the permeate tube. A brine solution flows through the shell-side of the spiral cross-flow filter. The caustic and brine solutions flowing through the filter are separated by a hydrophobic membrane material (*e.g*., polytetrafluoroethylene) comprising the filter element. The caustic and brine solutions flowing through the filter are heated to a temperature less than the boiling point temperature of pure water, for example, about 90°C. Due to the difference in the water vapor pressure of brine and caustic solutions (Pᵥ (brine) > Pᵥ (caustic)), water vapor transports through the membrane from the brine solution to the caustic solution, thereby concentrating the brine solution and diluting the caustic solution.

The feed solutions to the spiral cross-flow filter may comprise waste streams from a chemical plant and the exit streams from the spiral cross-flow filter may be recycled back to the chemical plant. In this manner, membrane distillation using spiral cross-flow filters as described in this specification may reduce waste discharges and feed requirements for chemical processing operations. However, to optimize membrane distillation of brine or other salt solutions, the thermal polarization and chemical concentration polarization (*i.e.,* localized temperature and concentration increases in a boundary layer immediately adjacent to the filtration membrane) need to be minimized. Chemical concentration polarization on the salt side may cause the formation of salt crystals on the membrane material, which can lead to wetting out of the hydrophobic material and cross-contamination. Chemical concentration polarization on the caustic side may decrease the water vapor transmission rate. Thermal polarization on either side may also decrease the water vapor transmission rate. Therefore, it is important to maintain a balanced tangential flow through the spiral cross-flow filter on both the permeate tube-side and the shell-side.

On the shell-side, the balanced tangential flow of salt solution between adjacent leaves of the filter element is generally not problematic because the salt solution can be fed to and withdrawn from the filter through ports in the outer shell or end caps. On the tube-side, however, the tangential flow of caustic solution within the leaves may be problematic because the solution must flow from the permeate tube inlet into the leaves, out of the leaves, back into the permeate tube, and withdrawn through the permeate tube outlet. The use of spiral cross-flow filters comprising permeate tubes comprising inlet and/or outlet end manifolds improves the distribution of flow through the leaves of the filter element, thereby improving the flow dynamics and providing for the balanced flow necessary to reduce polarization in membrane distillation operations.

The spiral cross-flow filter of the invention comprises an outer shell, a permeate tube coaxially aligned within the outer shell and radially offset therefrom, and a pleated filter element located within an annulus between the outer shell and the permeate tube. The filter element comprises a composite filter material comprising a first layer of a membrane material adjacent the outer shell and a second layer of a permeate spacer material adjacent the permeate tube. The pleats of the filter element define a plurality of circumferentially spaced leaves. The plurality of leaves are wrapped around the permeate tube in a uniform direction. A middle portion of the permeate tube is blocked and configured to direct fluid out of the permeate tube, into the plurality of leaves, and back into the permeate tube downstream from the blocked middle portion of the permeate tube.

In various embodiments, a permeate tube may comprise at least one manifold formed by a perforated radially offset section of a cylindrical wall of the permeate tube. One or more leaves of the plurality of leaves of the filter element may be attached to the permeate tube through attachments between edges of the leaves and an outer cylindrical surface of the permeate tube adjacent to the manifold.

In various embodiments, a permeate tube may comprise a first manifold positioned adjacent to an inlet end of the permeate tube and a second manifold positioned adjacent to an outlet end of the permeate tube. The first manifold may be formed by a perforated radially offset section of a cylindrical wall of a hollow inlet portion of the permeate tube. The second manifold may be formed by a perforated radially offset section of a cylindrical wall of a hollow outlet portion of the permeate tube. One or more leaves of the plurality of leaves of the filter element may be attached to the permeate tube through attachments between edges of the leaves and an outer cylindrical surface of the inlet portion of the permeate tube adjacent to the first manifold. One or more leaves of the plurality of leaves of the filter element may be attached to the permeate tube through attachments between edges of the leaves and an outer cylindrical surface of the outlet portion of the permeate tube adjacent to the second manifold.

In various embodiments, a spiral cross-flow filter comprises an outer shell, a permeate tube coaxially aligned within the outer shell and radially offset therefrom, and a pleated filter element located within an annulus between the outer shell and the permeate tube. The permeate tube may comprise a blocked middle portion, a hollow inlet portion comprising a first manifold formed by a perforated radially offset section of a cylindrical wall of the inlet portion, and a hollow outlet portion comprising a second manifold formed by a perforated radially offset section of a cylindrical wall of the outlet portion. The filter element may comprise a first layer of a membrane material adjacent the outer shell and a second layer of a permeate spacer material adjacent the permeate tube. The pleats of the filter element may define a plurality of circumferentially spaced leaves, and the plurality of leaves may wrap around the permeate tube in a uniform direction.

According to the invention, the permeate tube comprises a blocked middle portion, a hollow inlet portion comprising a manifold formed by a perforated radially offset section of a cylindrical wall of the inlet portion, and a hollow outlet comprises a manifold formed by a perforated radially offset section of a cylindrical wall of the outlet portion.

The present disclosure has been written with reference to various exemplary, illustrative, and non-limiting embodiments.

Thus, this disclosure is not limited by the description of the various exemplary, illustrative, and non-limiting embodiments but rather solely by the claims.

## Claims

1. A spiral cross-flow filter, comprising:
an outer shell (103);
a permeate tube (104) having a blocked middle portion (140), wherein the permeate tube is coaxially-aligned within the outer shell and radially-offset therefrom, thereby forming an annular space between the outer shell and the permeate tube; and
a pleated filter element (105) located within the annular space between the outer shell and the permeate tube, the pleated filter element comprising a composite filter material comprising:
a first layer (109) of a membrane material adjacent the outer shell; and
a second layer (110) of a permeate spacer material adjacent the permeate tube,
the pleats of the filter element defining a plurality of circumferentially spaced leaves (107);
wherein the plurality of circumferentially spaced leaves wrap around the permeate tube in a uniform direction;
**characterized in that** the permeate tube comprises:
a hollow inlet portion (120) comprising a first annular-shaped manifold (150) formed by a perforated section (153) of a cylindrical wall of the inlet portion, wherein the perforated section is radially-offset inwardly relative to an outer cylindrical surface (147) of the blocked middle portion and an outer cylindrical surface (127) of the inlet portion; and
a hollow outlet portion (130) comprising a second annular-shaped manifold (150) formed by a perforated section (153) of a cylindrical wall of the outer portion, wherein the perforated section is radially offset inwardly relative to an outer cylindrical surface (147) of the blocked middle portion and an outer cylindrical surface (137) of the outlet portion;
wherein the filter is configured to direct fluid out of the permeate tube into the plurality of leaves and back into the permeate tube downstream of the blocked middle portion.

2. The filter of claim 1, wherein one or more leaves (107) of the plurality of leaves of the filter element are attached to the permeate tube through attachments (112) between edges (111) of the leaves and an outer cylindrical surface (127) of the inlet portion of the permeate tube adjacent to the first manifold, and wherein one or more leaves of the plurality of leaves of the filter element are attached to the permeate tube through attachments between the edges of the leaves and an outer cylindrical surface (137) of the outlet portion of the permeate tube adjacent to the second manifold.

3. The filter of claim 2, wherein the one or more leaves of the plurality of leaves of the filter element are attached to the permeate tube through attachments (112) between the edges of the leaves and the outer cylindrical surface (147) of the middle portion of the permeate tube adjacent to the first manifold, and wherein one or more leaves of the plurality of leaves of the filter element are attached to the permeate tube through attachments (112) between the edges of the leaves and an outer cylindrical surface (147) of the middle portion of the permeate tube adjacent to the second manifold.

4. The filter of claim 2 or claim 3, wherein the attachments between the edges of the leaves and the outer cylindrical surfaces of the permeate tube extend along the entire axial lengths of the respective outer cylindrical surfaces.

5. The filter of any one of claims 2-4, wherein the attachments do not comprise an adhesive.

6. The filter of any one of claims 2-5, wherein the attachments comprise a bond formed by ultrasonic welding, thermal bonding, IR bonding, radio frequency bonding, microwave bonding, laser welding, or hot air welding.

7. The filter of any one of claims 2-6, wherein the attachments comprise ultrasonic welds.

8. The filter of any one of claims 1-7, wherein each leaf of the plurality of leaves comprises a bond along at least a portion of an inlet edge and along at least a portion of an outlet edge of the filter element, the bond sealing together adjacent pleats of the filter element to provide each leaf with a fluid impervious seal at the inlet edge and the outlet edge of the filter element.

9. The filter of claim 8, wherein the bonds do not comprise an adhesive.

10. The filter of claim 8 or claim 9, wherein the bonds are formed by ultrasonic welding, thermal bonding, IR bonding, radio frequency bonding, microwave bonding, laser welding, or hot air welding.

11. The filter of any one of claims 8-10, wherein the bonds comprise ultrasonic welds.

12. The filter of any one of claims 1-11, wherein the blocked middle portion is blocked along the entire axial length of the middle portion located between the first manifold and the second manifold.

13. The filter of any one of claims 1-12, wherein the first manifold and the second manifold each comprise perforations located along the entire length and circumference of the radially offset sections of the cylindrical wall.

14. The filter of any one of claims 1-13, wherein the permeate tube is symmetrical about a midpoint along the axial length of the permeate tube.

## Patentansprüche

1. Spiralförmiger Tangentialflussfilter, Folgendes umfassend:
eine äußere Hülle (103);
eine durchdringende Röhre (104) mit einem blockierten Mittelabschnitt (140), wobei die durchdringende Röhre koaxial an der äußeren Hülle ausgerichtet und radial von dieser versetzt ist, wodurch ein ringförmiger Raum zwischen der äußeren Hülle und der durchdringenden Röhre ausgebildet wird; und
ein gefaltetes Filterelement (105), angeordnet innerhalb des ringförmigen Raums zwischen der äußeren Hülle und der durchdringenden Röhre, wobei das gefaltete Filterelement ein Verbundfiltermaterial umfasst, das Folgendes umfasst:
eine erste Schicht (109) eines Membranmaterials, das an die äußere Hülle angrenzt; und
eine zweite Schicht (110) eines durchdringenden Abstandhaltermaterials, das an die durchdringende Röhre angrenzt,
wobei die Falten des Filterelements mehrere umlaufend beabstandete Blätter (107) ausbilden;
wobei die mehreren umlaufend beabstandeten Blätter in einer einheitlichen Richtung um die durchdringende Röhre gewickelt sind;
**dadurch gekennzeichnet, dass** die durchdringende Röhre Folgendes umfasst:
einen hohlen Einlassabschnitt (120), der einen ersten ringförmigen Verteiler (150) umfasst, ausgebildet durch einen perforierten Abschnitt (153) einer zylindrischen Wand des Einlassabschnitts, wobei der perforierte Abschnitt mit Bezug auf eine äußere zylindrische Oberfläche (147) des blockierten Mittelabschnitts und eine äußere zylindrische Oberfläche (127) des Einlassabschnitts radial nach innen versetzt ist; und
einen hohlen Auslassabschnitt (130), der einen zweiten ringförmigen Verteiler (150) umfasst, ausgebildet durch einen perforierten Abschnitt (153) einer zylindrischen Wand des äußeren Abschnitts, wobei der perforierte Abschnitt mit Bezug auf eine äußere zylindrische Oberfläche (147) des blockierten Mittelabschnitts und eine äußere zylindrische Oberfläche (137) des Auslassabschnitts radial nach innen versetzt ist;
wobei der Filter konfiguriert ist, stromabwärts von dem blockierten Mittelabschnitt Fluid aus der durchdringenden Röhre in die mehreren Blätter und zurück in die durchdringende Röhre zu leiten.

2. Filter nach Anspruch 1, wobei ein oder mehrere Blätter (107) der mehreren Blätter des Filterelements durch Anbaupunkte (112) zwischen Kanten (111) der Blätter und einer äußeren zylindrischen Oberfläche (127) des Einlassabschnitts der durchdringenden Röhre neben dem ersten Verteiler an der durchdringenden Röhre befestigt sind und wobei ein oder mehrere Blätter der mehreren Blätter des Filterelements durch Anbaupunkte zwischen den Kanten der Blätter und einer äußeren zylindrischen Oberfläche (137) des Auslassabschnitts der durchdringenden Röhre neben dem zweiten Verteiler an der durchdringenden Röhre befestigt sind.

3. Filter nach Anspruch 2, wobei das eine oder die mehreren Blätter der mehreren Blätter des Filterelements durch Anbaupunkte (112) zwischen den Kanten der Blätter und der äußeren zylindrischen Oberfläche (147) des Mittelabschnitts der durchdringenden Röhre neben dem ersten Verteiler an der durchdringenden Röhre befestigt sind und wobei ein oder mehrere Blätter der mehreren Blätter des Filterelements durch Anbaupunkte (112) zwischen den Kanten der Blätter und einer äußeren zylindrischen Oberfläche (147) des Mittelabschnitts der durchdringenden Röhre neben dem zweiten Verteiler an der durchdringenden Röhre befestigt sind.

4. Filter nach Anspruch 2 oder 3, wobei die Anbaupunkte zwischen den Kanten der Blätter und den äußeren zylindrischen Oberflächen der durchdringenden Röhre sich entlang der gesamten axialen Längen der jeweiligen äußeren zylindrischen Oberflächen erstrecken.

5. Filter nach einem der Ansprüche 2-4, wobei die Anbaupunkte keinen Klebstoff umfassen.

6. Filter nach einem der Ansprüche 2-5, wobei die Anbaupunkte eine Verbindung umfassen, ausgebildet durch Ultraschallschweißen, thermisches Verbinden, IR-Verbinden, Funkfrequenzverbinden, Mikrowellenverbinden, Laserschweißen oder Heißluftschweißen.

7. Filter nach einem der Ansprüche 2-6, wobei die Anbaupunkte Ultraschallschweißnahten umfassen.

8. Filter nach einem der Ansprüche 1-7, wobei jedes Blatt der mehreren Blätter eine Verbindung entlang wenigstens eines Abschnitts einer Einlasskante und entlang wenigstens eines Abschnitts einer Auslasskante des Filterelements umfasst, wobei die Verbindung aneinander angrenzende Falten des Filterelements aneinander abdichtet, um jedem Blatt eine fluidundurchlässige Dichtung an der Einlasskante und der Auslasskante des Filterelements bereitzustellen.

9. Filter nach Anspruch 8, wobei die Verbindungen keinen Klebstoff umfassen.

10. Filter nach Anspruch 8 oder 9, wobei die Verbindungen durch Ultraschallschweißen, thermisches Verbinden, IR-Verbinden, Funkfrequenzverbinden, Mikrowellenverbinden, Laserschweißen oder Heißluftschweißen erzeugt werden.

11. Filter nach einem der Ansprüche 8-10, wobei die Verbindungen Ultraschallschweißnahten umfassen.

12. Filter nach einem der Ansprüche 1-11, wobei der blockierte Mittelabschnitt entlang der gesamten axialen Länge des Mittelabschnitts zwischen dem ersten Verteiler und dem zweiten Verteiler blockiert ist.

13. Filter nach einem der Ansprüche 1-12, wobei der erste Verteiler und der zweite Verteiler jeweils entlang der gesamten Länge und des gesamten Umfangs der radial versetzten Abschnitte der zylindrischen Wand angeordnete Perforierungen umfassen.

14. Filter nach einem der Ansprüche 1-13, wobei die durchdringende Röhre entlang der axialen Länge der durchdringenden Röhre um einen Mittelpunkt symmetrisch ist.

## Revendications

1. Filtre à courant transversal en spirale, comprenant :
une coque externe (103) ;
un tube à perméat (104) ayant une portion milieu bloquée (140), le tube à perméat étant coaxialement aligné au sein de la coque externe et en étant radialement décalé, formant ainsi un espace annulaire entre la coque externe et le tube à perméat ; et
un élément de filtre plissé (105) situé au sein de l'espace annulaire entre la coque externe et le tube à perméat, l'élément de filtre plissé comprenant un matériau de filtre composite comprenant :
une première couche (109) d'un matériau de membrane adjacent à la coque externe ; et
une seconde couche (110) d'un matériau d'écartement de perméat adjacent au tube à perméat,
les plis de l'élément de filtre définissant une pluralité de feuilles circonférentiellement espacées(107);
dans lequel la pluralité de feuilles circonférentiellement espacées s'enveloppe autour du tube à perméat dans une direction uniforme ;
**caractérisé en ce que** le tube à perméat comprend :
une portion d'admission creuse (120) comprenant un premier collecteur de forme annulaire (150) formé par une section perforée (153) d'une paroi cylindrique de la portion d'admission, la section perforée étant radialement décalée vers l'intérieur par rapport à une surface cylindrique externe (147) de la portion milieu bloquée et une surface cylindrique externe (127) de la portion d'admission ; et
une portion de refoulement creuse (130) comprenant un second collecteur de forme annulaire (150) formée par une section perforée (153) d'une paroi cylindrique de la portion externe, la section perforée étant radialement décalée vers l'intérieur par rapport à une surface cylindrique externe (147) de la portion milieu bloquée et une surface cylindrique externe (137) de la portion de refoulement ;
dans lequel le filtre est configuré pour diriger un fluide hors du tube à perméat dans la pluralité de feuilles et de retour dans le tube à perméat en aval de la portion milieu bloquée.

2. Filtre selon la revendication 1, dans lequel une ou plusieurs feuilles (107) de la pluralité de feuilles de l'élément de filtre sont attachées au tube à perméat par l'intermédiaire d'attaches (112) entre les bords (111) des feuilles et une surface cylindrique externe (127) de la portion d'admission du tube à perméat adjacent au premier collecteur, et dans lequel une ou plusieurs feuilles de la pluralité de feuilles de l'élément de filtre sont attachées au tube à perméat par l'intermédiaire d'attaches entre les bords des feuilles et une surface cylindrique externe (137) de la portion de refoulement du tube à perméat adjacent au second collecteur.

3. Filtre selon la revendication 2, dans lequel les une ou plusieurs feuilles de la pluralité de feuilles de l'élément de filtre sont attachées au tube à perméat par l'intermédiaire d'attaches (112) entre les bords des feuilles et la surface cylindrique externe (147) de la portion milieu du tube à perméat adjacent au premier collecteur, et dans lequel une ou plusieurs feuilles de la pluralité de feuilles de l'élément de filtre sont attachées au tube à perméat par l'intermédiaire d'attaches (112) entre les bords des feuilles et une surface cylindrique externe (147) de la portion milieu du tube à perméat adjacent au second collecteur.

4. Filtre selon la revendication 2 ou la revendication 3, dans lequel les attaches entre les bords des feuilles et les surfaces cylindriques externes du tube à perméat s'étendent suivant les longueurs axiales entières des surfaces cylindriques externes respectives.

5. Filtre selon l'une quelconque des revendications 2 à 4, dans lequel les attaches ne comprennent pas d'adhésif.

6. Filtre selon l'une quelconque des revendications 2 à 5, dans lequel les attaches comprennent une liaison formée par soudage ultrasonore, liage thermique, liage IR, liage radiofréquence, liage aux micro-ondes, soudage laser ou soudage à l'air chaud.

7. Filtre selon l'une quelconque des revendications 2 à 6, dans lequel les attaches comprennent des soudures ultrasonores.

8. Filtre selon l'une quelconque des revendications 1 à 7, dans lequel chaque feuille de la pluralité de feuilles comprend une liaison le long d'au moins une portion d'un bord d'admission et le long d'au moins une portion d'un bord de refoulement de l'élément de filtre, la liaison scellant ensemble des plis adjacents de l'élément de filtre pour doter chaque feuille d'un joint imperméable aux fluides au niveau du bord d'admission et au niveau du bord de refoulement de l'élément de filtre.

9. Filtre selon la revendication 8, dans lequel les liaisons ne comprennent pas d'adhésif.

10. Filtre selon la revendication 8 ou la revendication 9, dans lequel les liaisons sont formées par soudage ultrasonore, liage thermique, liage IR, liage radiofréquence, liage aux micro-ondes, soudage laser ou soudage à l'air chaud.

11. Filtre selon l'une quelconque des revendications 8 à 10, dans lequel les liaisons comprennent des soudures ultrasonores.

12. Filtre selon l'une quelconque des revendications 1 à 11, dans lequel la portion milieu bloquée est bloquée suivant la longueur axiale entière de la portion milieu située entre le premier collecteur et le second collecteur.

13. Filtre selon l'une quelconque des revendications 1 à 12, dans lequel le premier collecteur et le second collecteur comprennent chacun des perforations situées suivant la longueur entière et la circonférence entière des sections décalées radialement de la paroi cylindrique.

14. Filtre selon l'une quelconque des revendications 1 à 13, dans lequel le tube à perméat est symétrique autour d'un point milieu suivant la longueur axiale du tube à perméat.
